# EUROPÄISCHE PATENTSCHRIFT

(11) **EP 0 519 205 B1**
(45) Veröffentlichungstag und Bekanntmachung des Hinweises auf die Patenterteilung: **18.01.1995**
(21) Anmeldenummer: 92108056.0
(22) Anmeldetag: 13.05.1992
(51) Int. Cl.: B60R 25/02

(54) **Verriegelungsvorrichtung zwischen einem Wählhebel eines Getriebes und einem Zündschloss eines Kraftfahrzeuges**
Locking device between a gear box lever and an ignition lock of a vehicle
Dispositif de verrouillage entre le levier de commande de la boîte de vitesse et la serrure d'allumage d'un véhicule

(30) Priorität: 20.06.1991 DE 4120382
(43) Veröffentlichungstag der Anmeldung: 23.12.1992
(73) Patentinhaber: Dr.Ing.h.c. F. Porsche Aktiengesellschaft, 70435 Stuttgart (DE)
(72) Erfinder: Reiss, Norbert, W-7121 Ingersheim 1 (DE); Plocher, Bernd, W-7407 Rottenburg (DE); Sander, Edmund, W-7250 Leonberg (DE); Dieden, Thomas, W-7135 Wiernsheim (DE)

(56) Entgegenhaltungen:
- EP-A- 0 373 320
- EP-A- 0 429 792
- DE-A- 4 037 542

## Beschreibung

Die Erfindung betrifft eine Verriegelungsvorrichtung gemäß dem Oberbegriff des Patentanspruches 1.

Aus der EP-0 307 846 A1 ist eine gattungsgemäße Verriegelungsvorrichtung bekannt, bei der an einem in einem Wählhebelbock in verschiedene Stellungen schwenkbar gehaltenen Wählhebel eine manuell zu betätigende Taste angeordnet ist, die ein verschiebbares Sperrteil am Wählhebel betätigt, welches in eine der Parkstellung zugeordnete Ausnehmung einer Kulisse eingreift. Bei nicht betätigter Taste ist der Wählhebel somit in dieser Parkstellung verriegelt.

Ein Zündschloß wirkt über ein flexibles Gestänge auf eine im Wählhebelbock gelagerte Sperrklinke einerseits derart ein, daß das Zündschloß mit dem Zündschlüssel nur in eine das Abziehen des Schlüssels gestattende Ruhestellung bringbar ist, wenn sich der Wählhebel in der Parkstellung befindet und die Taste nicht betätigt ist, wobei die Sperrklinke das Sperrteil sperrt. Andererseits ist der Wählhebel in dieser Parkstellung so lange gesperrt, bis der Zündschlüssel in Richtung einer ersten Betriebsstellung verdreht wurde, wodurch die Sperrklinke das Sperrteil frei gibt. Die Taste ist somit betätigbar und der Wählhebel kann aus der Parkstellung heraus bewegt werden.

Aus der DE-38 42 332 C1 ist eine Verriegelungsvorrichtung bekannt, bei der zwischen Wählhebel und Zündschloß ein flexibles Gestänge angeordnet ist, welches an beiden Enden von sich gehäuseseitig abstützenden Druckfedern auf Zug beansprucht wird. Die Federkraft der zündschloßseitigen Feder ist dabei größer als die der wählhebelseitigen Feder.

Die Gefahr eines bewußten oder unbewußten Mißbrauches einer solchen Verriegelungsvorrichtung dahingehend, daß der Zündschlüssel abgezogen werden kann, ohne daß der Wählhebel in der Parkstellung verriegelt ist, ist insbesondere dann gegeben, wenn die das Kraftfahrzeug bedienende Person mit beiden Händen gleichzeitig den Zündschlüssel bzw. den Wählhebel betätigen kann. Dieses ist z.B. bei Kraftfahrzeugen der Fall, deren Zündschloß auf der dem Wählhebel gegenüberliegenden Seite des Lenkrades angeordnet ist.

Der Erfindung liegt die Aufgabe zugrunde, eine gattungsgemäße Verriegelungsvorrichtung zu schaffen, bei der ein mißbräuchliches Abziehen des Zündschlüssels bei noch nicht eingelegter Parkstellung des Wählhebels unter allen Umständen vermieden ist.

Die Lösung dieser Aufgabe gelingt mit den im Patentanspruch 1 angegebenen Merkmalen.
Vorteilhafte Ausgestaltungen der Erfindung sind in den Unteransprüchen benannt.

In der Parkstellung des Wählhebels wird ein als Nockenteil ausgebildetes Sperrteil formschlüssig von einer Aussparung einer Sperrklinke umfaßt. Bei betätigter Taste hält das Nockenteil dabei die Sperrklinke in eine Position, in der ein fanghaken der Sperrklinke in die Bewegungsbahn eines mit dem wählhebelseitigen Ende eines flexiblen Gestänges verbundenen Sperrnockens das Gestänge arretierend eingreift. Das somit blockierte Gestänge verhindert ein Verdrehen des Zündschlüssels in die Ruhestellung des Zündschlosses und dadurch das Abziehen des Schlüssels und z.B. ein Einrasten des Lenkradschlosses. Das formschlüssige Umfassen des Nockenteiles bewirkt, daß beim Lösen der betätigten Taste das Nockenteil die Sperrklinke verdreht, wobei der Fanghaken aus der Bewegungsbahn des Sperrnockens gedreht wird. Das Gestänge ist freigegeben und der Zündschlüssel kann in die Ruhestellung gedreht werden, wobei der Sperrnocken auf seiner Bewegungsbahn in eine den Fanghaken festlegende Position bewegt wird. Ein Drücken der Taste ist nun nicht möglich, da die über den Fanghaken festgelegte Sperrklinke das Nockenteil mittels der Aussparung festhält.

Ein unbeabsichtigtes oder mißbräuchliches Abziehen des Zündschlüssels bei noch nicht eingelegter Parkstellung ist somit unter allen Umständen vermieden. Bei gedrückter Taste in der Parkstellung sowie in allen anderen Wählhebelstellungen ist ein Abziehen des Zündschlüssels durch das Eingreifen des Fanghakens sicher verhindert. Das formschlüssige Umfassen des Nockenteils bewirkt eine Zwangssteuerung der Sperrklinke, so daß bei beabsichtigtem Abziehen des Zündschlüssels die Position des Wählhebels und die Betätigung der Taste abgefragt wird.
Insbesondere bei Kraftfahrzeugen, die das Zündschloß auf der dem Wählhebel gegenüberliegenden Seite des Lenkrades angeordnet haben, die das Kraftfahrzeug bedienende Person somit gleichzeitig Zündschlüssel und Wählhebel betätigen kann, ist keine Zwischenstellung von Zündschloß und Wählhebel findbar, in der der Zündschlüssel vor dem Einlegen der Parkstellung und dem Lösen der Taste abziehbar ist.

Die Erfindung wird beispielhaft anhand von Figuren erläutert.

Es zeigen:
- Fig. 1: schematisch eine Verriegelungsvorrichtung im Fahrbetrieb eines Kraftfahrzeuges,
- Fig. 2: schematisch wesentliche Teile einer Verriegelungsvorrichtung gemäß Fig. 1 mit einem Wählhebel in Parkstellung,
- Fig. 3: schematisch wesentliche Teile einer Verriegelungsvorrichtung mit einem Wählhebel in Parkstellung ähnlich Fig. 2 und
- Fig. 4: schematisch wesentliche Teile einer Verriegelungsvorrichtung mit einem Wählhebel in Parkstellung mit einem Zündschloß in Ruhestellung.

In einem Kraftfahrzeug ist ein Wählhebel 1 für ein nicht gezeigtes, automatisches Getriebe um eine Achse A drehbar in einem Wählhebelbock 2 gelagert. Der Wählhebelbock 2 ist über ein flexibles Gestänge 3 mit einem in der Nähe eines nicht gezeigten Lenkrades angeordneten Zündschloß 4 verbunden. Dieses weist ein Gehäuse 5 auf, an dem das zündschloßseitige Ende 6 des Gestänges 3 gehalten ist. In dem Gehäuse 5 stützt sich eine auf einen mit dem Gestänge 3 verbundenen, in dem Gehäuse 5 verschiebbar gelagerten Schieber 7 mit einer Federkraft K1 wirkende Feder 8 ab, die das Gestänge 3 auf Zug belastet.

In dem Gehäuse 5 ist eine gemeinsam mit einem Zündschlüssel 9 verdrehbare Scheibe 10 angeordnet, die eine Nocke 11 aufweist. Der Schieber 10 weist eine mit der Nocke 11 korrespondierende Aufnahme 12 auf.
An dem wählhebelseitigen Ende 15 stützt sich eine mit einer Federkraft K2 versehene Feder 16 in dem Wählhebelbock 2 ab. Die Federkraft K2 ist größer als die Federkraft K1. Diese Feder 16 wirkt auf ein mit dem Gestänge 3 fest verbundenes Gleitstück 17 und belastet das Gestänge 3 somit ebenfalls auf Zug. Benachbart dem Wählhebel 1 ist an dem Gleitstück 17 eine Sperrnocke 18 angeformt.

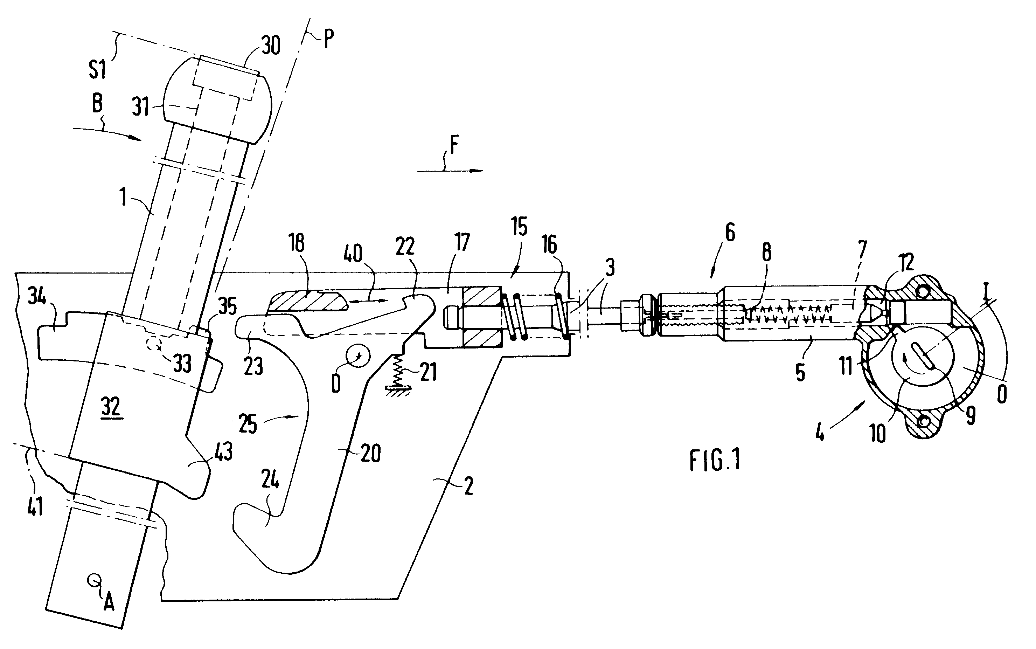

An dem Wählhebelbock 2 ist eine um eine Achse D schwenkbare Sperrklinke 20 gehalten, die mit einer geringen, durch eine Stützfeder 21 aufgebrachten Federkraft entgegen dem Uhrzeigersinn belastet in der in Fig. 1 gezeigten Stellung gehalten wird. Die Sperrklinke 20 weist einen dem Gleitstück 17 zugewandten Fanghaken 22 sowie eine durch einen oberen bzw. einen unteren Arm 23 bzw. 24 begrenzte, dem Wählhebel 1 zugewandte Aussparung 25 auf.

Am oberen Ende des Wählhebels 1 ist eine manuell in zwei Stellungen S1, S2 bringbare Taste 30 angeordnet, welche im unbetätigten Zustand federbelastet in der Stellung S2 verharrt. Diese Taste 30 ist über ein als Stange 31 ausgebildetes Verbindungsglied starr mit einem am Wählhebel 1 angeordneten, der Aussparung 25 zugewandten Nockenteil 32 verbunden. Fest mit der Stange 31 bzw. dem Nockenteil 32 verbunden ist ein Sperrstift der in eine ortsfeste Kulisse 34 mit einer einer Parkstellung P des Wählhebels 1 zugeordneten Ausnehmung 35 eingreift.

Im Betrieb des Kraftfahrzeuges weist die Fahrtrichtung in Richtung des Pfeiles F. Der Zündschlüssel 9 befindet sich gemäß Fig. 1 im Zündschloß 4, welches in eine erste Betriebsstellung I verdreht ist. Die am Gleitstück 17 angreifende Feder 16 überdrückt die Feder 8, wodurch der Schieber 7 in der ein Verdrehen der Scheibe 10 verhindernden Stellung verharrt.
Das Gleitstück 17 befindet sich in seiner linken Endstellung, wobei der Fanghaken 22 in die zur Richtung F parallele Bewegungsbahn 40 des Sperrnockens 18 eingreift.

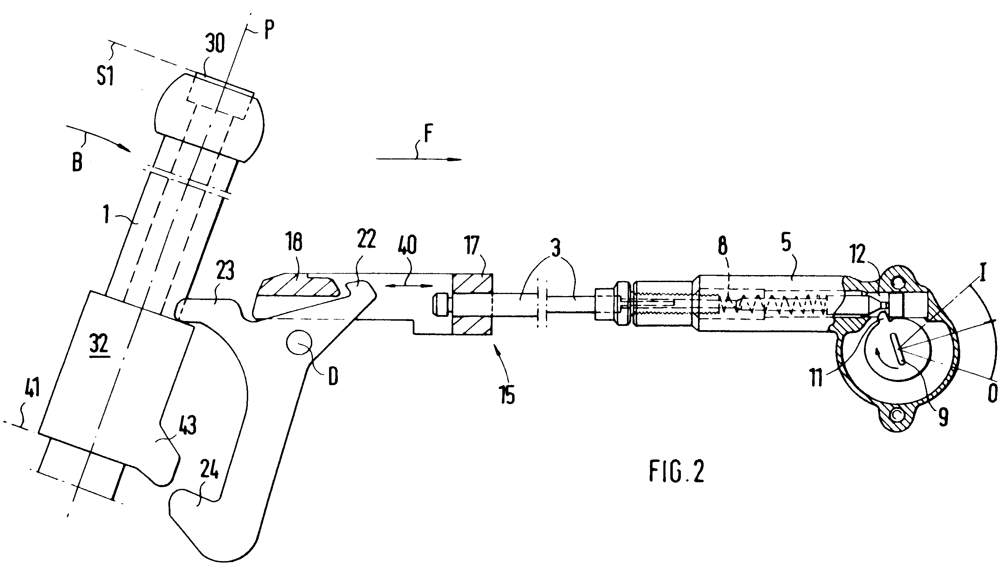

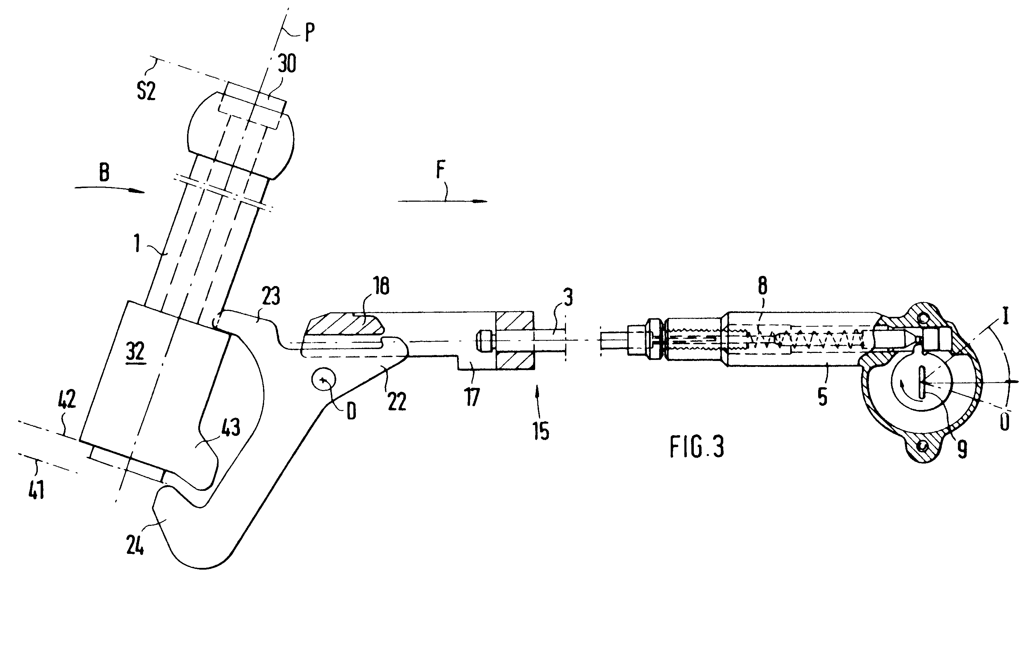

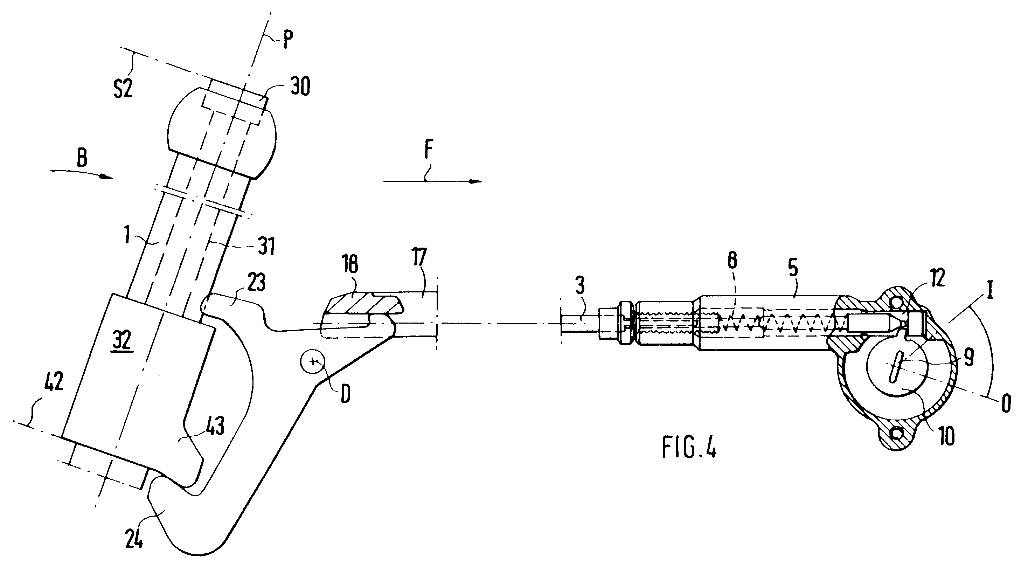

Der Wählhebel 1 wird mit der in eine Stellung S1 betätigten Taste 30 in Richtung des Bewegungspfeiles B geschwenkt. Infolge der starren Koppelung zwischen Taste 30 und Nockenteil 32 befindet sich das Nockenteil 32 mit dem Sperrstift 33 in einer mit der Stellung S1 korrespondierenden, unteren Stellung 41.
Wird der Wählhebel 1 gemäß Fig. 2 in die Parkstellung P geschwenkt, verschiebt er dabei das Gleitstück 17 durch Kontakt mit der Sperrnocke 18 entlang dessen Bewegungsbahn 40 bis in die Nähe des Fanghakens 22. Infolge dessen wird die Feder 16 gestaucht und die Federkraft K1 kann das Gestänge 3 in Richtung F verschieben, wodurch die Nocke 11 der Scheibe 10 in die Aufnahme 12 eingreift.
Zu diesem Zeitpunkt kann der Zündschlüssel 9 von der ersten Betriebsstellung I aus in Richtung der Ruhestellung O gedreht werden, jedoch ohne diese zu erreichen, da bereits nach einem kurzen Verdrehweg die Sperrnocke 18 das Gestänge 3 arretierend in den Fanghaken 22 einfährt.
Die Sperrklinke 20 kann nicht ausweichend um ihre Achse D rotieren, da in der Parkstellung P die Aussparung 25 das Nockenteil 32 formschlüssig mit den Armen 23 und 24 umfaßt.
Nach dem Lösen der Taste 30 gemäß Fig. 3 in die nicht betätigte Stellung S2 wird das Nockenteil 32 in die mit der Stellung S2 korrespondierende obere Stellung 42 verschoben, wobei der Sperrstift 33 in die Ausnehmung 35 einfährt. Dabei wird die Sperrklinke 20 im Uhrzeigersinn um die Achse D verdreht, wodurch der Fanghaken 22 aus der Bewegungsbahn 40 herausgedreht wird.
Abschließend kann gemäß Fig. 4 mit dem Zündschlüssel 9 über die Nocke 11 das Gestänge 3 in die rechte Einstellung bewegt werden. Dabei erreicht das Zündschloß 4 die das Abziehen des Zündschlüssels 9 ermöglichende Ruhestellung O, in der z.B. ein Lenkradschloß einrasten kann.
Der Sperrnocken 18 befindet sich nun in einer den Fanghaken 22 blockierenden Stellung. Infolge dessen kann die Taste 30 nicht in die Stellung S1 bewegt werden, da eine an das Nockenteil 32 angeformte Nocke 43 mit dem unteren Arm 24 kollidiert. Der Wählhebel 1 ist somit in der Parkstellung P festgelegt. Durch unsachgemäßes Bedienen in den Wählhebel 1 eingeleitete Kräfte, z.B. durch Ziehen mit hohen Kräften am Wählhebel 1 um die Parkstellung P zu verlassen, werden über den Sperrstift 33 und die Ausnehmung 35 aufgenommen. Die Sperrklinke 20 sowie das Gestänge 3 bleiben dabei kräftefrei.

Soll das Kraftfahrzeug in Betrieb genommen werden, so gibt nach dem Einführen des Zündschlüssels 9 in das Zündschloß 4 ein geringes Verdrehen des Zündschlüssels 9 in Richtung Betriebsstellung I das Gestänge 3 frei, so daß die Feder 16 das Gleitstück 17 in die den Fanghaken 22 nicht blockierende Stellung gemäß Fig. 1 verschiebt. Nach dem Betätigen der Taste 30 in die Stellung S1 kann der Wählhebel 1 aus der Parkstellung P herausgeschwenkt werden. Der Fanghaken 22 ist infolgedessen das Gestänge 3 blockierend in die Bewegungsbahn 40 des Sperrnockens 18 gefahren, so daß das Abziehen des Zündschlüssels 9 unmöglich ist.

Ein bewußter oder unbewußter Mißbrauch der zuvor beschriebenen Verriegelungsvorrichtung dahingehend, daß durch beidhändiges Bedienen von Zündschloß 4 und Wählhebel 1 eine das Abziehen des Zündschlüssels 9 gestattende Stellung des Zündschlosses 4 gefunden werden kann, ohne daß der Wählhebel 1 mit nicht betätigter Taste 30 in der Parkstellung P steht, ist durch die kinematische Zwangskoppelung der beschriebenen Bauteile ausgeschlossen.

## Patentansprüche

1. Verriegelungsvorrichtung zwischen einem Wählhebel (1) eines automatischen Getriebes und einem Zündschloß (4) eines Kraftfahrzeuges, wobei der Wählhebel in verschiedene Stellungen schwenkbar gehalten ist und der Wählhebel in einer Parkstellung (P) mit einem in eine Ausnehmung einer Kulisse greifenden, mittels einer am Wählhebel angeordneten Taste (30) manuell verschiebbaren Sperrteiles (32) verriegelbar ist,
und mit einer Sperrklinke (20), die über ein flexibles Gestänge (3) derart mit dem Zündschloß (4) zusammenwirkt, daß einerseits der Zündschlüssel (9) nur in der Ruhestellung (O) des Zündschlosses abziehbar ist, wenn sich der Wählhebel in Parkstellung befindet und die Taste (30) nicht betätigt ist, wobei die Sperrklinke (20) das Sperrteil (32) sperrt,
andererseits der Wählhebel (1) in der Parkstellung (P) gesperrt ist, bis der Zündschlüssel (9) in Richtung einer Betriebsstellung (I) gedreht wurde, wodurch die Sperrklinke (20) das Sperrteil (32) frei gibt, **dadurch gekennzeichnet,** daß in der Parkstellung (P) das Sperrteil (Nockenteil 32) bei in eine Stellung (S1) betätigter Taste (30) formschlüssig von einer Aussparung (25) der Sperrklinke (20) umfaßt ist, welche in dieser Stellung mit einem Fanghaken (22) in die Bewegungsbahn (40) eines mit dem wählhebelseitigen Ende (15) des Gestänges (3) verbundenen Sperrnockens (18) so eingreift, daß das Gestänge (3) arretiert ist und der Zündschlüssel (9) nicht in die Ruhestellung (O) verdrehbar ist.

2. Vorrichtung nach Anspruch 1, **dadurch gekennzeichnet,** daß in der Parkstellung (P) bei in einer Stellung (S2) befindlicher, nicht betätigter Taste (30) der Fanghaken (22) den Sperrnocken (18) freigebend angeordnet ist.

3. Vorrichtung nach Anspruch 2, **dadurch gekennzeichnet,** daß an dem zündschloßseitigen Ende (6) des Gestänges (3) ein Schieber (7) angeordnet ist, an dem eine sich in einem Gehäuse (5) abstützende, das Gestänge (3) auf Zug belastende, mit einer Federkraft (K1) wirkende Feder (8) angreift, und daß sich am wählhebelseitigen Ende (15) eine auf die Sperrnocke (18) mit einer Federkraft (K2) wirkende Feder (16) das Gestänge (3) auf Zug belastend abstützt, wobei die Federkraft (K1) geringer ausgelegt ist als die Federkraft (K2).

4. Vorrichtung nach Anspruch 2 oder 3, **dadurch gekennzeichnet,** daß sich bei abgezogenem Zündschlüssel (9) der Fanghaken (22) in das Verschwenken der Sperrklinke (20) verhindernder Anlage mit dem Sperrnocken (18) befindet und die Nocke (43) in die Taste (30) sperrender Anlage mit einem die Aussparung (25) begrenzenden, unteren Arm (24) angeordnet ist.

## Claims

1. A locking device between a selector lever (1) of an automatic transmission and an ignition lock (4) of a motor vehicle, wherein the selector lever is held pivotably in various positions and the selector lever is lockable in a parking position (P) by an arresting part (32) engaging in a recess in a slotted guide and manually displaceable by means of a button (30) situated on the selector lever, and with an arresting catch (20) cooperating with the ignition lock (4) by way of a flexible rod (3) in such a way that on the one hand the ignition key (9) can be withdrawn only in the rest position (O) of the ignition lock when the selector lever is in the parking position and the button (30) is not actuated, wherein the arresting catch (20) arrests the arresting part (32), and on the other hand the selector lever (1) is locked in the parking position (P) until the ignition key (9) is turned in the direction of a first operating position (I), as a result of which the arresting catch (20) releases the arresting part (32), **characterized in that** in the parking position (P) the arresting part (cam part 32) is received with positive locking by a recess (25) in the arresting catch (20) when the button (30) is moved into a position (S1), a catching hook (22) on the arresting catch (20) engaging in this position in the path of movement (40) of an arresting cam (18) connected to the end (15) of the rod (3) towards the selector lever, in such a way that the rod (3) is arrested and the ignition key (9) cannot be turned into the rest position (O).

2. A device according to Claim 1, **characterized in that** in the parking position (P), with the button (30) not actuated and situated in a position (**S2**), the catching hook (22) is situated so as to release the arresting cam (18).

3. A device according to Claim 2, **characterized in that** a slide (7) is arranged at the ignition-lock end (6) of the rod (3), wherein a spring (8) supported in a housing (5) and tensioning the rod (3) and acting with a force (**K1**) engages on the said slide (7), and a spring (16) acting upon the arresting cam (18) with a force (**K2**) is supported on the selector-lever end (15) so as to tension the rod (3), the spring force (**K1**) being designed to be less than the spring force (**K2**).

4. A device according to Claim 2 or 3, **characterized in that** when the ignition key (9) is withdrawn the catching hook (22) rests against the arresting cam (18) so as to prevent the arresting catch (20) from pivoting, and the cam (43) rests against a lower arm (24) bounding the recess (25) so as to arrest the button (30).

## Revendications

1. Dispositif de verrouillage entre un levier de sélection (1) d'une boîte de vitesses automatique et une serrure d'allumage (4) d'un véhicule automobile, le levier de sélection étant maintenu pivotant dans différentes positions et pouvant être verrouillé dans une position de parking (P) avec un élément de blocage (32) s'engageant dans un évidement d'une coulisse, déplaçable manuellement au moyen d'une touche (30) placée sur le levier de sélection,
et comportant un cliquet de blocage (20), qui coopère, par une tringlerie (3) flexible, avec la serrure d'allumage (4), de manière que d'une part la clé de contact (9) ne puisse être retirée que dans la position de repos (O) de la serrure d'allumage, lorsque le levier de sélection se trouve en position de parking et la touche (30) n'est pas actionnée, le cliquet de blocage (20) bloquant l'élément des blocage (32),
d'autre part le levier de sélection (1) est bloqué dans la position de parking (P), jusqu'à ce que la clé de contact (9) soit tournée en direction d'une première position de fonctionnement (I), ce qui fait que le cliquet de blocage (20) libère l'élément de blocage (32), caractérisé en ce qu'en position de parking (P), l'élément de blocage (élément à came 32) est entouré, par concordance de forme, lorsque la touche (30) est actionnée dans une position (S1), par une découpe (25) du cliquet de blocage (20), qui dans cette position s'engage, avec un crochet d'arrêt (22) dans la trajectoire (40) d'une came de blocage (18), reliée avec l'extrémité (15) côté levier de sélection de la tringlerie (3), de manière que la tringlerie (3) soit bloquée et que la clé de contact (9) ne puisse tourner dans la position de repos (O).

2. Dispositif selon la revendication 1, caractérisé en ce que dans la position de parking (P), le crochet d'arrêt (22) libère la came de blocage (18), lorsque la touche (30) non actionnée se trouve dans une position (S2).

3. Dispositif selon la revendication 2, caractérisé en ce qu'à l'extrémité (6) côté serrure d'allumage de la tringlerie (3), il est prévu un curseur (7) sur lequel agit un ressort (8) prenant appui dans un boîtier (5), sollicitant la tringlerie (3) en traction, agissant avec une force de ressort (K1), et en ce qu'à l'extrémité (15) côté levier de sélection, prend appui un ressort (16), agissant sur la came de blocage (18) avec une force de ressort (K2), en sollicitant en traction la tringlerie (3), la force de ressort (K1) étant inférieure à la force de ressort (K2).

4. Dispositif selon les revendications 2 ou 3, caractérisé en ce que dans le cas où la clé de contact (9) est retirée, le crochet d'arrêt (22) se trouve appliqué contre la came de blocage (18), de manière à empêcher le pivotement du cliquet de blocage (20), et en ce que la came (43) est appliquée contre un bras (24) inférieur, délimitant la découpe (25), ce qui bloque la touche (30).
